## Europäisches Patentamt

## European Patent Office

## Office européen des brevets

(19)

(11) Veröffentlichungsnummer: **0 254 671**
**B1**

(12) **EUROPÄISCHE PATENTSCHRIFT**

(45) Veröffentlichungstag der Patentschrift: **26.09.90**

(51) Int. Cl.⁵: **A 47 J 43/10**

(21) Anmeldenummer: **87730080.6**

(22) Anmeldetag: **21.07.87**

(54) Vorrichtung zum Schlagen von Schaum oder Schnee.

(30) Priorität: **23.07.86 DE 3624947**

(43) Veröffentlichungstag der Anmeldung:
**27.01.88 Patentblatt 88/04**

(45) Bekanntmachung des Hinweises auf die
Patenterteilung:
**26.09.90 Patentblatt 90/39**

(84) Benannte Vertragsstaaten:
**AT BE CH DE ES FR GB IT LI LU NL**

(56) Entgegenhaltungen:
**DE-C- 448 301**
**DE-C- 876 765**
**DE-U-8 517 418**
**FR-A-1 478 857**
**US-A-1 367 002**

(73) Patentinhaber: **Haushaltsprodukte Vertriebs
GmbH
Graf-von-Zeppelin-Strasse
D-5430 Montabaur (DE)**

(72) Erfinder: **Fürbeth, Alfred
Hellgarten 26a
D-5409 Dausenau (DE)**
Erfinder: **Steinko, Willi
Königsberger Strasse 9
D-5408 Nassau (DE)**

(74) Vertreter: **Ninnemann, Detlef, Dipl.-Ing.
Patentanwälte Maikowski & Ninnemann
Xantener Strasse 10
D-1000 Berlin 15 (DE)**

Courier Press, Leamington Spa, England.

**Beschreibung**

Gegenstand der Erfindung ist eine Vorrichtung zum Schlagen von Schaum oder Schnee mit einem zylindrischen Gehäuse, dessen Boden und Deckel verschließbar sind und in dem mindestens eine Lochscheibe, die über eine durch eine zentrale Bohrung im Gehäusedeckel geführte Kolbenstange mit einem außerhalb des Gehäuses befindlichen Handgriff verbunden ist, hin- und herbewegbar angeordnet ist und mit einer im Gehäuseboden angeordneten, verschließbaren Entlerröffnung.

Eine Vorrichtung der genannten Art ist aus dem DE—U—85 17 418 bekannt. Sie besteht aus einem zylindrischen Gehäuse, dessen offene Oberseite mittels einer Kappe verschließbar ist, die eine zentrale Bohrung aufweist, durch die eine Kolbenstange gesteckt ist, die außerhalb des Gehäuses mit einem Handgriff und im Inneren des Gehäuses mit einem Tauchkolben mit mehreren achsparallelen Löchern verbunden ist. Der Gehäuseboden weist eine Entleeröffnung auf, die mittels eines Deckels oder eines anschraubbaren oder mit dem Gehäuseboden bajonettverschlußartig lösbar verbindbaren Verschlußteil verschließbar ist. Auf der Kolbenstange können benachbart zum Tauchkolben eine oder mehrere mit Abstand zum Tauchkolben bzw. zueinander angeordnete und über Spiralfedern miteinander verbundene weitere Lochscheiben vorgesehen sein. Dem Tauchkolben ist ein Deckel zugeordnet, der die Löcher des Tauchkolbens verschließt, damit die geschlagene Sahne oder der Eischnee aus dem Innenraum des Gehäuses über die Entleeröffnung herausgedrückt werden kann. In die Entleeröffnung kann zusätzlich eine Tülle eingesetzt werden, über die das geschlagene Gut ausgedrückt werden kann, so daß die bekannte Vorrichtung auch als Garnierspritze verwendbar ist.

Ein wesentlicher Nachteil der bekannten Vorrichtung zum Schlagen von Sahne oder Eischnee besteht darin, daß nach dem Schlagen der Sahne der Tauchkolben aus dem Gehäuse genommen und mit dem elastischen Deckel verbunden werden muß, damit die geschlagene Sahne aus der Entleeröffnung gedrückt werden kann. Das Verbinden des Tauchkolbens mit dem Deckel ist nicht nur umständlich, sondern wird auch noch dadurch erschwert, daß Reste des im allgemeinen fetten bzw. klebrigen Gutes am Tauchkoben anhaften und somit die Verbindung mit dem elastischen Deckel erschweren. Ein weiterer Nachteil besteht darin, daß zum Auspressen des geschlagenen Gutes zunächst der Verschlußdeckel am Boden des Gehäuses entfernt werden und die entsprechende Tülle in die Entleeröffnung eingesetzt werden muß, wobei das Herstellen der Klemmverbindung mit der Entleeröffnung ebenfalls dadurch erschwert wird, daß fettes und klebriges Gut an der Entleeröffnung anhaftet. Schließlich besteht ein weiterer Nachteil der bekannten Vorrichtung darin, daß zum Auspressen des geschlagenen Gutes infolge der mittigen Anordnung der Entleeröffnung für den Benutzer keine gute Sicht auf den Verlauf des ausgepreßten Gutes besteht, so daß beim Garnieren der Verlauf des ausgepreßten Gutes nur unzureichend beobachtet werden kann.

Aufgabe der vorliegenden Erfindung ist es, eine Vorrichtung der eingangs genannten Art zu schaffen, die leicht handhabbar, insbesondere in Bezug auf das Abdecken der Lochscheibe zum Auspressen des geschlagenen Gutes ist und ein rückstandfreies Auspressen des geschlagenen Gutes aus dem Innenraum des Gehäuses sicherstellt und deren Entleeröffnung zum Schlagen des Gutes leicht geschlossen und zum Entleeren leicht geöffnet werden kann.

Diese Aufgabe wird erfindungsgemäß dadurch gelöst, daß im Inneren des zylindrischen Gehäuses zwischen dem Gehäusedeckel und der mindestens einen Lochscheibe eine geschlossene zylindrische Kolbenmanschette angeordnet ist, deren Außendurchmesser dem Innendurchmesser des zylindrischen Gehäuses angepaßt ist und die eine Einrichtung zum Verbinden der Kolbenmanschette mit der mindestens einen Lochscheibe aufweist.

Die erfindungsgemäße Lösung gewährleistet eine leichte Handhabbarkeit der Vorrichtung zum rückstandfreien Auspressen des geschlagenen Gutes, ohne daß die mit fettigen oder klebrigen Rückständen versehene Lochscheibe nach dem Schlagen des Gutes vom Benutzer angefaßt und mit einer Abdeckvorrichtung versehen werden muß.

In weiterer Ausgestaltung der erfindungsgemäßen Lösung besteht die Lochscheibe aus einer Federlochscheibe, die mittig einmündende Blattfedern aufweist, die von der Lochscheibe abstehen. Durch diese erfindungsgemäße Lösung ist eine Verbesserung des Wirkungsgrades beim Schlagen von Sahne oder Eischnee gegeben und gleichzeitig sichergestellt, daß die Anzahl der an der Kolbenstange befestigten Teile gering ist.

Eine weitere Ausgestaltung der erfindungsgemäßen Lösung ist dadurch gekennzeichnet, daß die Kolbenstange in ihrem dem Handgriff entgegengesetzten Ende zur Aufnahme der Lochscheibengruppe zylinderförmig ausgebildet ist und zwei gegenüberliegende Nocken aufweist und daß zur Aufnahme der Lochscheibe eine umlaufende Nut am Ende der Kolbenstange vorgesehen ist, wobei die Federlochscheiben eine mittige Bohrung mit zwei den Nocken der Kolbenstange entsprechenden Kerben aufweisen und die Kerben beider Federlochscheiben um 90° zueinander versetzt sind und die Lochscheibe eine mittige, der umlaufenden Nut der Kolbenstange angepaßte erste Bohrung und eine zweite, an die erste Bohrung anschließende Bohrung aufweist, deren Durchmesser größer als der der ersten Bohrung ist. Durch diese Lösung wird durch Anbringen mehrerer Lochscheiben eine weitere Erhöhung des Wirkungsgrades sichergestellt, wobei einerseits eine feste Verbindung mit der Kolbenstange und andererseits zum Reinigen eine leichte Lösbarkeit von der Kolbenstange gewährleistet ist.

Eine weitere Ausgestaltung der erfindungsgemäßen Lösung ist dadurch gekennzeichnet, daß die Entleeröffnung im Gehäuseboden außermittig angeordnet und der Gehäuseboden mit einer drehbaren Verschlußkappe versehen ist, die eine zur Aufnahme einer Tülle dienende Öffnung aufweist, die in einer Stellung der Verschlußkappe mit der Entleeröffnung fluchtet, wobei die Verschlußkappenöffnung und die Tülle nach Art eines Bajonettverschlusses miteinander verbindbar sind. Diese erfindungsgemäße Lösung gestattet ein leichtes Öffnen und Schließen des Gehäuses zum Schlagen des Gutes und zum Entleeren des Gutes, wobei ein guter Sichtkontakt zu dem aus der Entleeröffnung ausgepreßten Gut aufgrund der außermittigen Anordnung der Entleeröffnung besteht und darüber hinaus eine Tülle zum Auspressen des Gutes leicht und mit geringem Kraftaufwand und dennoch festsitzend eingesetzt werden kann.

Anhand eines in der Zeichnung dargestellten Ausführungsbeispieles soll der der Erfindung zugrundeliegende Gedanke näher erläutert werden. Es zeigen:

Figur 1 einen Längsschnitt durch die Vorrichtung zum Schlagen von Schaum oder Schnee in einer ersten Stellung zum Schlagen des betreffenden Gutes;

Figur 2 einen Längsschnitt durch die Vorrichtung in einer zweiten Stellung zum Auspressen des geschlagenen Gutes;

Figur 3A bis C eine Draufsicht, Seitenansicht und einen Querschnitt durch die Kolbenstange;

Figur 4 einen Schnitt durch die Kolbenmanschette;

Figur 5A und B eine Draufsicht und einen Querschnitt durch eine Federlochscheibe;

Figur 6A und B eine Draufsicht und einen Teilschnitt durch die Lochscheibe;

Figur 7A und B einen Längsschnitt durch das Gehäuse und eine Draufsicht auf den Gehäuseboden;

Figur 8A und B eine Draufsicht und eine teilweise geschnittene Seitenansicht der drehbaren Verschlußkappe;

Figur 9 bis 11 eine Seitenansicht, einen Schnitt und eine Draufsicht auf verschiedene Arten von Tüllen zum Einsetzen in die Verschlußkappenöffnung.

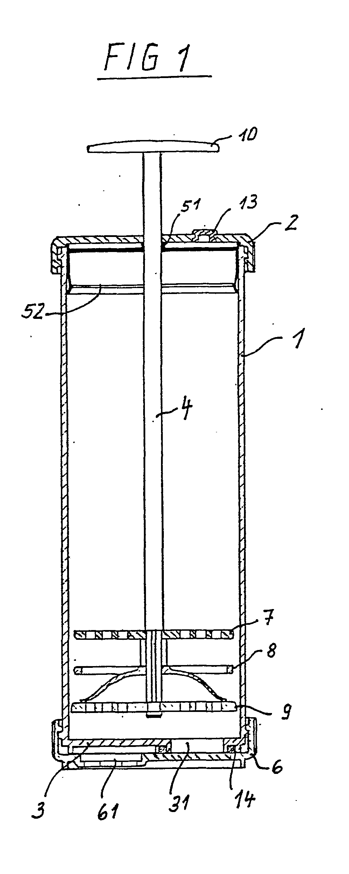

Der in Figur 1 dargestellte Längsschnitt durch die erfindungsgemäße Vorrichtung zum Schlagen von Schaum oder Schnee zeigt ein zylindrisches Gehäuse 1, dessen Gehäuseboden 3 mit einer Entleeröffnung 31 versehen ist. Die Gehäuseoberseite ist mittels eines aufschraubbaren Gehäusedeckels 2 verschließbar, wobei vorzugsweise ein eingängiger Gewindesteg vorgesehen ist, so daß der Gehäusedeckel 2 mit einer kurzen Drehung aufgeschraubt bzw. abgenommen werden kann.

In dem Gehäusedeckel 2 ist ein Schieber 13 vorgesehen, der eine Entlüftungsöffnung im Gehäusedeckel 2 verschließt bzw. freigibt, so daß zum Auspressen des geschlagenen Gutes bei geöffneter Entlüftungsöffnung bei der Abwärtsbewegung der Kolbenstange kein Unterdruck im oberen Teil des Gehäuses 1 entsteht, während zum Schlagen des Gutes die Entlüftungsöffnung verschlossen ist.

Eine durch eine mittige Bohrung des Gehäusedeckels 2 geführte Kolbenstange 4 weist an ihrem außerhalb des Gehäuses 1 befindlichen Ende einen Handgriff 10 auf, während das andere Ende der Kolbenstange 4 drei Lochscheiben 7, 8, 9, aufnimmt, von denen zwei als Federlochscheiben 7, 8 ausgebildet sind, während die am äußeren Ende der Kolbenstange 4 angebrachte Lochscheibe 9 keine Federung aufweist. Wie der Darstellung gemäß Figur 1 zu entnehmen ist, sind die beiden Federlochscheiben 7, 8 um 90° zueinander verdreht, so daß die aus der Mitte der Federlochscheibe 8 herausgeführten Blattfedern zu erkennen sind, während in dem Schnitt gemäß Figur 1 die eine Blattfeder der Federlochscheibe 7 erkennbar ist.

Am Gehäuseboden 3 ist eine drehbare Verschlußkappe 6 vorgesehen, die eine Öffnung 61 aufweist, die so angeordnet ist, daß sie zum Entleeren des Gehäuses bei entsprechenden Verdrehen der Verschlußkappe 6 mit der Entleeröffnung 31 fluchtet. Zum Abdichten der Entleeröffnung ist eine Dichtung 14 vorgesehen, die als Ringdichtung um die Entleeröffnung 31 gelegt ist und beim Schlagen des Gutes auf dem geschlossenen Teil der Verschlußkappe 6 aufliegt, während sie zum Entleeren des geschlagenen Gutes die Seitenwand abdichtet, so daß kein geschlagenes Gut zwischen Verschlußkappe 6 und Gehäuseboden 3 eindringen kann.

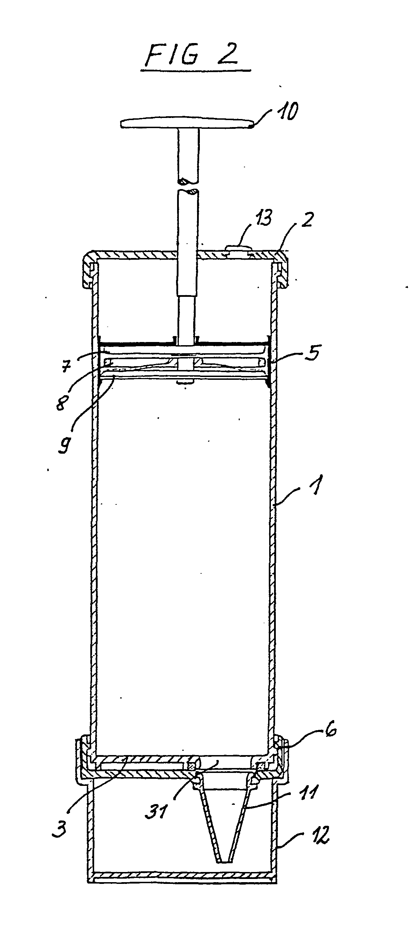

Im Bereich des Gehäusedeckels 2 ist im Inneren des Gehäuses 1 eine Kolbenmanschette 5 angeordnet, die aus einem elastischen Material, vorzugsweise Gummi oder Kunststoff besteht und eine mittige Öffnung aufweist, durch die die Kolbenstange 4 geführt ist. Die zylinderförmige Kolbenmanschette 5 liegt dicht an der Gehäuseinnenwand an und ist mit einem umlaufenden Steg 52 versehen, dessen Funktion anhand der Figur 2 näher erläutert werden soll.

Die in Figur 2 dargestellte Stellung der Vorrichtung zeigt die Vorrichtung zum Auspressen des geschlagenen Gutes, wobei die in Figur 2 verwendeten Bezugsziffern, die mit den in der Figur 1 verwendeten Bezugsziffern übereinstimmen, gleiche Teile bezeichnen.

Nach dem Schlagen des Gutes wird die Kolbenstange 4 mittels des Handgriffes 10 so weit in Richtung auf den Gehäusedeckel 2 gezogen, daß die Lochscheibenanordnung 7, 8, 9 in die Kolbenmanschette 5 hineingezogen und die äußerste Lochscheibe 9 hinter dem Steg 51 der Kolbenmanschette 5 einrastet. In dieser Stellung liegt die Lochscheibenanordnung 7, 8, 9 eng aneinander und durch Abwärtsbewegen der Kolbenstange 4 wird die Kolbenmanschette 5 mitgeführt und drückt das geschlagene Gut vollständig aus dem Innenraum des Gehäuse 1 raus, wobei die eng an der Innenwand des Gehäuses 1 anliegende Kolbenmanschette 5 dafür sorgt, daß keine Reste des geschlagenen Gutes im Gehäuse 1 verbleiben. Die im Bereich der Lochscheibenanordnung 7, 8, 9 verbleibenden Reste des geschlagenen Gutes sind minimal und können nach Auspressen des Gutes und Herausnehmen der Lochscheibenanordnung 7, 8, 9 aus dem Innenraum des Gehäuses 1 leicht entfernt werden.

In der in Figur 2 dargestellten Stellung der Verschlußkappe 6 fluchtet die Öffnung in der Verschlußkappe 6 mit der Entleeröffnung, so daß das Gut über die Öffnungen und eine in die Öffnung der Verschlußkappe 6 eingesetzte Tülle 11 ausgepreßt werden kann.

Zum Schutz der Tülle 11 und zum Schutz des noch im Innenraum des Gehäuses 1 befindlichen geschlagenen Gutes kann eine Abdeckkappe 12 auf die Verschlußkappe 6 aufgesteckt werden.

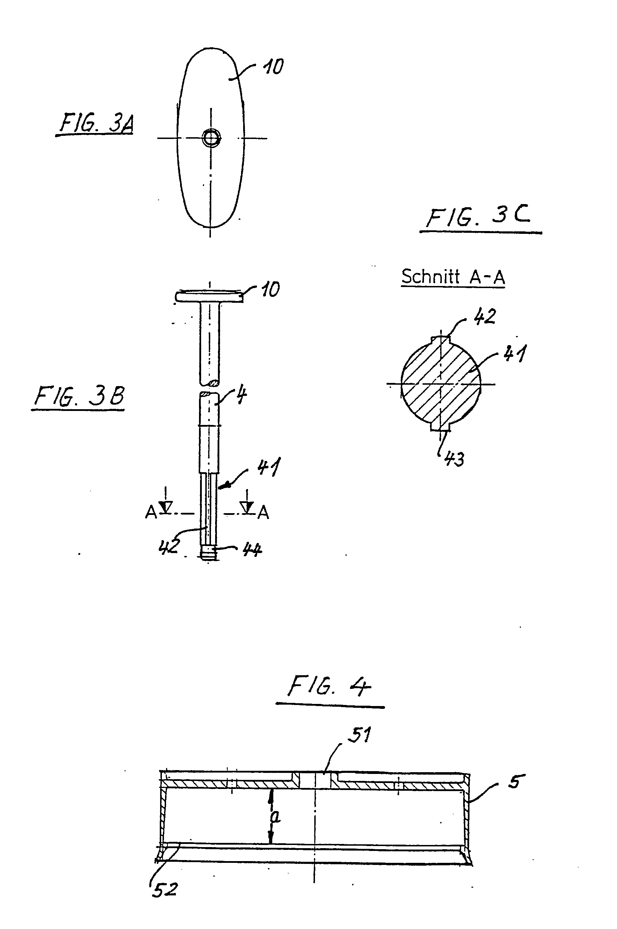

Nähere Einzelheiten der erfindungsgemäßen Vorrichtung werden nachstehend anhand der Figuren 3 bis 11 verdeutlicht.

In den Figuren 3A bis 3C ist die Kolbenstange 4 im Einzelnen dargestellt, wobei Figur 3A eine Draufsicht auf den Handgriff 10 zeigt, während Figur 3B eine Seitenansicht der Kolbenstange 4 zeigt. Während das eine Ende der Kolbenstange 4 mit dem Handgriff 10 versehen ist, weist das andere Ende der Kolbenstange 4 einen verjüngten zylindrischen Abschnitt 41 auf, der mit zwei gegenüberliegenden Nocken 42, 43 versehen ist, von denen in der Seitenansicht gemäß Figur 3B nur die eine Nocke 42 zur sehen ist. In dem in Figur 3C dargestellten Schnitt entlang der Linie A—A gemäß Figur 3B ist erkennbar, daß die Nocken 42, 43 einander gegenüberliegen. An den verjüngten zylindrischen Abschnitt 41 schließt sich eine umlaufende Nut 44 an, die zur Aufnahme der Lochscheibe dient, während der verjüngte Abschnitt 41 mit den Nocken 42, 43 zur Aufnahme der Federlochscheiben 7, 8, 9 vorgesehen ist.

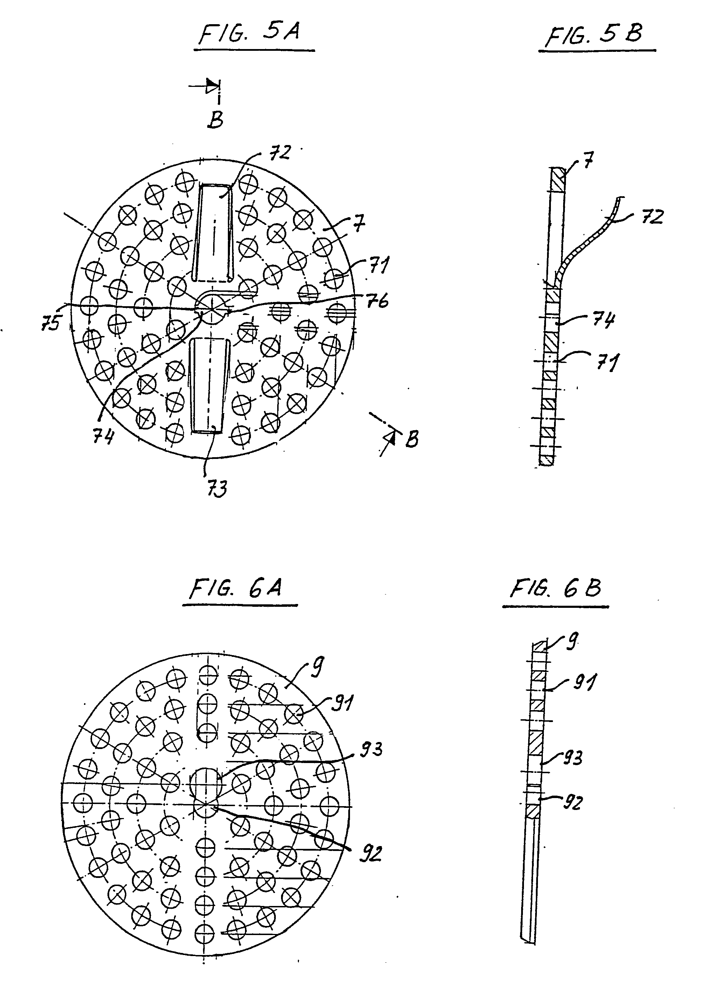

Figur 4 zeigt einen Querschnitt durch die Kolbenmanschette mit einer mittigen, dem Außendurchmesser der Kolbenstange 4 angepaßten Bohrung 51 und einem umlaufenden Steg 52, der vom unteren, äußeren Rand der Kolbenmanschette 5 schräg ansteigt und zur Oberseite hin einen Absatz bildet, hinter dem im eingezogenen Zustand die Lochscheibe 9 einrasten kann. Der Abstand a zwischen dem oberen Rand des umlaufenden Steges 52 und der Unterseite des oberen kreisförmigen Teiles der Kolbenmanschette 5 ist so bemessen, daß die entsprechenden Federlochscheiben und Lochscheiben im zusammengespannten Zustand als Lochscheibenanordnung in diesem Bereich unterbringbar sind. Ein festes Anliegen der unteren Lochscheibe an dem oberen Rand des umlaufenden Steges 52 ist durch die Federwirkung der Blattfedern der Federlochscheiben gewährleistet.

Die in Figur 5 dargestellte Federlochscheibe 7 zeigt in Figur 5A in der Draufsicht eine Vielzahl von Bohrungen 71, die gleichmäßig verteilt auf der Fläche der Federlochscheibe angeordnet sind. Wie insbesondere der Querschnittsdarstellung gemäß Figur 5B zu entnehmen ist, sind aus der Mitte der Federlochscheibe 7 zwei Blattfe-

dern 72, 73 herausgeführt und so abgekröpft, daß sie gleitend an einer zweiten Federlochscheibe bzw. an einer Lochscheibe anliegen.

Mittig weist die Federlochscheibe 7 eine Bohrung 74 auf, deren Durchmesser dem Außendurchmesser des zylindrischen Abschnittes 41 der Kolbenstange 4 angepaßt ist. Zwei gegenüberliegende Nuten 75, 76 sind so bemessen, daß sie den Nocken 42, 43 der Kolbenstange 4 entsprechen.

Bei der Verwendung mehrerer Federlochscheiben in der Lochscheibenanordnung werden die Nuten 75, 76 der einzelnen Federlochscheiben vorzugsweise um jeweils 90° zueinander versetzt angeordnet, so daß die abstehenden Blattfedern 72, 73 der Federlochscheiben jeweils auf der Fläche der Federlochscheiben aufliegen und nicht gegeneinander stoßen. Durch die Nuten- und Nockenzuordnung wird eine definierte Stellung der Federlochscheiben im Abschnitt 41 der Kolbenstange 4 sichergestellt, so daß beim Schlagen des Gutes keine Verstellung der Federlochscheiben möglich ist.

In Figur 6A ist eine Draufsicht auf eine Lochscheibe dargestellt, während Figur 6B eine teilweise geschnittene Seitenansicht der Lochscheibe 9 darstellt. Analog zu der in Figur 5 dargestellten Federlochscheibe weist die Lochscheibe 9 mehrere Bohrungen 91 auf, die gleichmäßig auf der Fläche der Lochscheibe 9 verteilt sind. Mittig ist eine Bohrung 92 vorgesehen, deren Durchmesser dem Durchmesser der umlaufenden Nut 44 der Kolbenstange 4 entspricht. Unmittelbar anschließend an die Mittenbohrung 92 ist eine zweite Bohrung 93 vorgesehen, die einen größeren Durchmesser als die Mittenbohrung 92 aufweist.

Zur Verbindung der Lochscheibe 9 mit der Kolbenstange 4 wird die Kolbenstange 4 durch die zweite Bohrung 93 geführt und die Lochscheibe 9 im Bereich der umlaufenden Nut 44 der Kolbenstange 4 in die Mittenbohrung 92 verschoben, so daß eine feste Verbindung zwischen Kolbenstange 4 und Lochscheibe 9 an der dafür vorgesehenen Stelle hergestellt wird.

Nach dem Auspressen des geschlagenen Gutes kann nach Abnehmen des Gehäusedeckels 2 die in der Kolbenmanschette 5 befindliche Lochscheibenanordnung aus dem Gehäuse 1 herausgenommen werden und ein Lösen der Verbindung der Kolbenmanschette 5 mit der Lochscheibenanordnung dadurch hergestellt werden, daß durch leichtes Verkanten der Kolbenstange die Verbindung zwischen der umlaufenden Nut 44 der Kolbenstange 4 und der Mittenbohrung 92 der Lochscheibe 9 gelöst wird, so daß die Lochscheibe 9 aus der Klemmverbindung mit der Kolbenmanschette 5 herausgenommen werden kann. Anschließend können die Federlochscheiben herausgezogen werden, wobei vorzugsweise der Außendurchmesser der Federlochscheiben etwas geringer als der der Lochscheibe ist, so daß die Federlochscheiben an dem inneren, umlaufenden Steg der Kolbenmanschette vorbeigeführt werden können, so daß das Abnehmen der Federlochscheiben von der Kolbenstange 4 erleichtert wird.

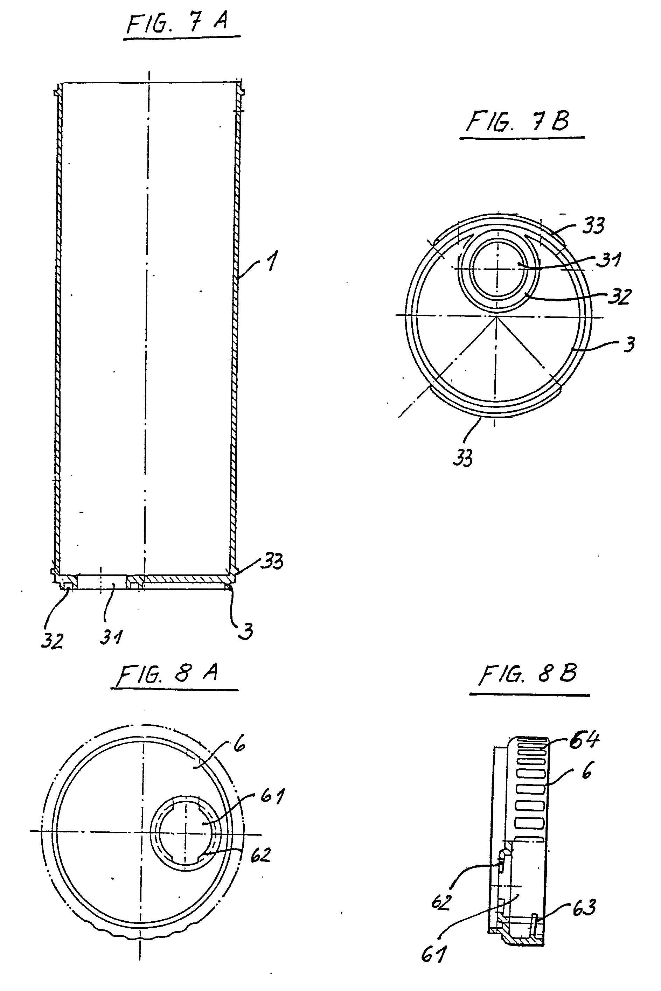

In Figur 7A ist ein Querschnitt durch das Gehäuse 1 sowie in Figur 7B eine Draufsicht auf den Gehäuseboden 3 dargestellt. Der Gehäuseboden 3 weist eine an den Rand des Gehäusebodens 3 angrenzende Entleeröffnung 31 auf, um die eine Nut 32 zur Aufnahme der Dichtung 14 vorgesehen ist. An der Außenseite des Gehäusebodens 3 sind zwei gegenüberliegende, schräg verlaufende Stege 33 vorgesehen, die jeweils ein Viertel der Umfangsfläche des Gehäusebodens 3 lang sind. Durch den schrägen Verlauf der Stege 33 kann die in Figur 8 näher dargestellte Verschlußkappe mit einer kurzen Drehbewegung aufgeschraubt und so angeordnet werden, daß entweder die Entleeröffnung 31 abgedeckt ist oder mit der in der Verschlußkappe vorgesehenen Öffnung 61 fluchtet.

Figur 8A zeigt eine Draufsicht auf die Verschlußkappe 6, während Figur 8B eine teilweise geschnittene Seitenansicht der Verschlußkappe 6 zeigt.

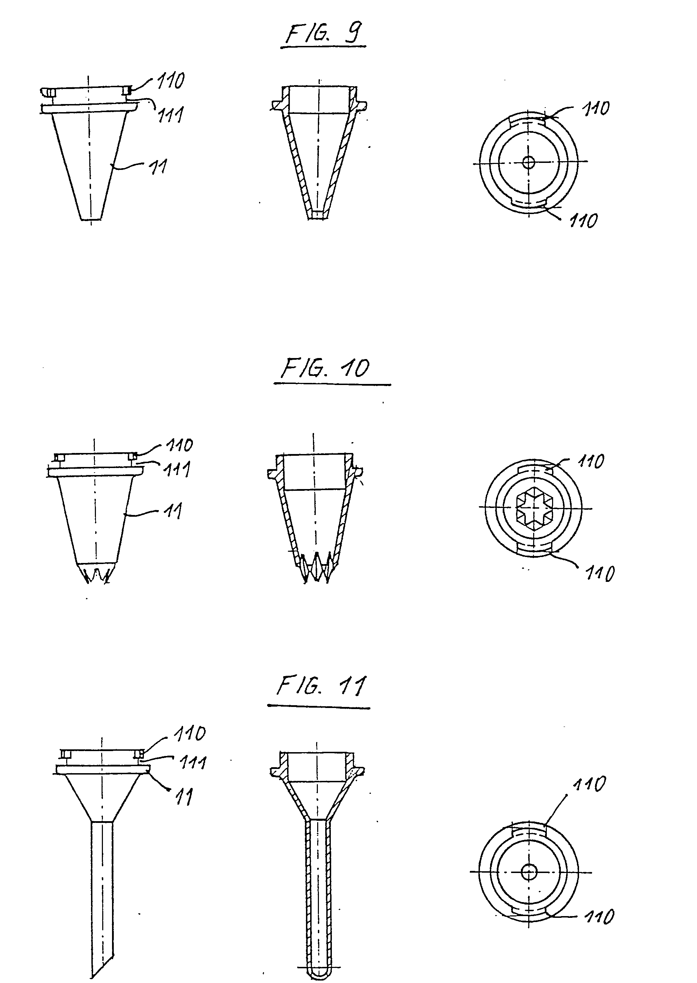

Die in der Verschlußkappe 6 vorgesehene Öffnung 61 ist so angeordnet, daß sie in der Entleerstellung der Verschlußkappe 6 mit der Entleeeröffnung 31 des Gehäusebodens 3 fluchtet. Zur Aufnahme von in den Figuren 9 bis 11 dargestellten Tüllen weist die Öffnung 61 zwei gegenüberliegend angeordnete umlaufende Stege 62 auf, die so bemessen sind, daß die entsprechenden Tüllen nach Art eines Bajonettverschlusses in die Öffnung 61 einsteckbar und mit der Verschlußkappe 6 verbindbar sind.

Aus der teilweise geschnittenen Seitenansicht der Verschlußkappe 6 gemäß Figur 8B ist zu erkennen, daß in der Innenfläche der Verschlußkappe 6 Stege 63 vorgesehen sind, die über die Stege 33 des Gehäusebodens 3 greifen und eine feste Verbindung mit dem Gehäuseboden 3 herstellen. Zur Erleichterung der Handhabung ist die Außenfläche der Verschlußkappe 6 mit Griffrillen 64 versehen, die auch bei Handhabung eines klebrigen oder fetten Gutes ein sicheres Drehen der Verschlußkappe 6 ermöglichen.

In den Figuren 9 bis 11 sind verschiedene Arten von Tüllen 11 dargestellt, die jeweils unterschiedlichen Garnierzwecken dienen. Die Tüllen weisen an ihrem oberen Rand entsprechende Stege 110 auf, die bajonettverschlußartig in die die Stege der Öffnung 61 der Verschlußkappe 6 eingreifen. Zum Einsetzen einer Tülle 11 in die Öffnung 61 der Verschlußkappe 6 werden die Stege 110 in die zwischen den Stegen 62 der Öffnung 61 verbleibenden Nuten eingesteckt und durch leichtes Drehen der Tülle 11 dafür gesorgt, daß die Stege 110 der Tülle über die Stege 62 der Öffnung 61 greifen und die Innenseite der Stege 62 an den Nuten 111 der Tüllen 11 anliegen.

Neben den in den Figuren 9 bis 11 dargestellten Tüllenformen sind je nach Anwendungszweck und Garnierwunsch auch weitere Tüllenformen möglich und einsetzbar.

## Patentansprüche

1. Vorrichtung zum Schlagen von Schaum oder Schnee mit einem zylindrischen Gehäuse (1), dessen Boden (3) und Dekkel verschließbar sind und in dem mindestens eine Lochscheibe (7, 8, 9), die über eine durch eine zentrale Bohrung im Gehäusedeckel (2) geführte Kolbenstange (4) mit einem außerhalb des Gehäuses (1) befindlichen Handgriff (10) verbunden ist, hin- und herbewegbar angeordnet ist und mit einer im Gehäuseboden (3) angeordneten, verschließbaren Entleeröffnung (31), dadurch gekennzeichnet, daß im Inneren des zylindrischen Gehäuses (1) zwischen dem Gehäusedeckel (2) und der mindestens einen Lochscheibe (7, 8, 9) eine geschlossene, zylindrische Kolbenmanschette (5) angeordnet ist, deren Außendurchmesser dem Innendurchmesser des zylindrischen Gehäuses (1) angepaßt ist und die eine Einrichtung (52) zum Verbinden der Kolbenmanschette (5) mit der mindestens einen Lochscheibe (7, 8, 9) aufweist.

2. Vorrichtung nach Anspruch 1, dadurch gekennzeichnet, daß die Lochscheibe aus einer Federlochscheibe (7, 8) besteht, die mittig einmündende Blattfedern (72, 73) aufweist, die von der Federlochscheibe (7, 8) abstehen.

3. Vorrichtung nach Anspruch 1 und 2, gekennzeichnet durch eine Lochscheibenanordnung (7, 8, 9), die aus zwei Federlochscheiben (7, 8) und einer am Ende der Kolbenstange (4) angeordneten Lochscheibe (9) besteht.

4. Vorrichtung nach Anspruch 3, dadurch gekennzeichnet, daß die beiden Federlochscheiben (7, 8) jeweils zwei mittig einmündende, entgegengesetzt gerichtete Blattfedern (72, 73) aufweisen, die um 90° zueinander versetzt sind.

5. Vorrichtung nach Anspruch 3, dadurch gekennzeichnet, daß die Kolbenstange (4) in ihrem dem Handgriff (10) entgegengesetzten Ende (41) zur Aufnahme der Lochscheibenanordnung (7, 8, 9) zylinderförmig ausgebildet ist und zwei gegenüberliegende Nocken (42, 43) aufweist und daß zur Aufnahme der Lochscheibe (9) eine umlaufende Nut (44) am Ende der Kolbenstange (4) vorgesehen ist.

6. Vorrichtung nach einem der vorstehenden Ansprüchen, dadurch gekennzeichnet, daß die Federlochscheiben (7, 8) eine Mittenbohrung (74) mit zwei den Nocken (42, 43) der Kolbenstange (4) entsprechenden Kerben (75, 76) aufweisen und daß die Kerben (75, 76) beider Federlochscheiben (7, 8) um 90° zueinander versetzt sind.

7. Vorrichtung nach Anspruch 5, dadurch gekennzeichnet, daß die Lochscheibe (9) eine mittige, der umlaufenden Nut (44) der Kolbenstange (4) angepaßte erste Bohrung (92) und eine zweite, an die erste Bohrung (92) anschließende Bohrung (93) aufweist, deren Durchmesser größer als der der ersten Bohrung (92) ist.

8. Vorrichtung nach den Ansprüchen 1 und 5, dadurch gekennzeichnet, daß die Kolbenmanschette (5) aus elastischem Material besteht und daß die Einrichtung zur Verbindung der Kolbenmanschette (5) mit der mindestens einen Loch-

## EP 0 254 671 B1

scheibe (7, 8, 9) aus einem nach innen gerichteten umlaufenden Steg besteht, der im unteren Bereich der Kolbenmanschette (5) derart angeordnet ist, daß zwischen der Oberseite der Kolbenmanschette (5) und dem Steg (52) die Lochscheibenanordnung (7, 8, 9) einsetzbar ist.

9. Vorrichtung nach einem der vorstehenden Ansprüche, dadurch gekennzeichnet, daß die Entleeröffnung (31) im Gehäuseboden (3) außermittig angeordnet ist.

10. Vorrichtung nach einem der vorstehenden Ansprüche, dadurch gekennzeichnet, daß der Gehäuseboden (83) mit einer drehbaren Verschlußkappe (6) versehen ist, die eine zur Aufnahme einer Tülle (11) dienende Öffnung (61) aufweist, die in einer Stellung der Verschlußkappe (6) mit der Entleeröffnung (31) fluchtet.

11. Vorrichtung nach Anspruch 10, dadurch gekennzeichnet, daß die Verschlußkappenöffnung (61) und die Tülle (11) nach Art eines Bajonettverschlusses miteinander verbindbar sind.

12. Vorrichtung nach Anspruch 10, dadurch gekennzeichnet, daß die Tülle (11) in die Verschlußkappenöffnung (61) einschraubbar ist.

13. Vorrichtung nach Anspruch 1, dadurch gekennzeichnet, daß der Gehäusedeckel (2) auf das zylindrische Gehäuse (1) aufschraubbar ist und eine mittels eines Schiebers (13) verschließbare Entlüftungsöffnung aufweist.

## Revendications

1. Dispositif pour le battage en mousse ou en neige, avec un boîtier cylindrique (1) dont le fond (3) et le couvercle sont susceptibles d'être fermés et dans lequel au moins un disque à trous (7, 8, 9) qui est relié à une poignée (10) se trouvant à l'extérieur du boîtier (1), par l'intermédiaire d'une tige de piston (4) guidée à travers un alésage central dans le couvercle de boîtier (2), est monté de façon mobile en un mouvement de va et vient, et avec un orifice d'évacuation (31) pouvant être fermé et prévu dans le fond de boîtier (3), caractérisé en ce qu'à l'intérieur du boîtier cylindrique (1), entre le couvercle de boîtier (2) et ledit disque à trous (7, 8, 9) est disposé un manchon de piston (5) cylindrique et fermé, dont le diamètre externe est adapté au diamètre interne du boîtier cylindrique (1) et qui comporte un dispositif (52) pour la liaison du manchon de piston (5) audit disque à trous (7, 8, 9).

2. Dispositif selon la revendication 1, caractérisé en ce que le disque à trous est formé par un disque à trous élastiques (7, 8) qui comporte des ressorts à lame (72, 73) débouchant au centre et qui font saillie du disque à trous élastiques (7, 8).

3. Dispositif selon les revendications 1 et 2, caractérisé par un agencement de disque à trous (7, 8, 9) qui se compose de deux disques à trous élastiques (7, 8) et d'un disque à trous (9) disposé à une extrémité de la tige de piston (4).

4. Dispositif selon la revendication 3, caractérisé en ce que les deux disques à trous élastiques (7, 8) comportent chacun deux ressorts à lame (72, 73) orientés de façon opposée et débouchant au centre et qui sont décalés l'un par rapport à l'autre de 90°.

5. Dispositif selon la revendication 3, caractérisé en ce que la tige de piston (4) est réalisée à son extrémité (41) opposée à la poignée (10) pour la réception de l'agencement de disque à trous (7, 8, 9), sous forme d'un cylindre et comporte deux cames (42, 43) situées en regard et qu'une gorge annulaire (44) pour la réception du disque à trous (9) est prévue à l'extrémité de la tige de piston (4).

6. Dispositif selon l'une des revendications précédentes, caractérisé en ce que les deux disques à trous élastiques (7, 8) comportent un alésage central (74) avec deux entailles (75, 74) correspondant aux cames (42, 43) de la tige de piston (44) et que les entailles (75, 76) des deux disques à trous élastiques (7, 8) sont décalées de 90°, l'une par rapport à l'autre.

7. Dispositif selon la revendication 5, caractérisé en ce que le disque à trous (9) comporte un premier alésage central (92) adapté à la gorge annulaire (44) de la tige de piston (4) et un deuxième alésage (93) faisant suite au premier alésage (92) et dont le diamètre est supérieur à celui du premier alésage (92).

8. Dispositif selon les revendications 1 et 5, caractérisé en ce que le manchon de piston (5) est réalisé en un matériau élastique et que le dispositif pour la liaison du manchon de piston (5) audit disque à trous (7, 8, 9) est formé par une barrette annulaire et orientée vers l'intérieur et qui est disposée dans la zone inférieure du manchon de piston (5) de telle façon que l'agencement de disque à trous (7, 8, 9) soit insérable entre la surface supérieure du manchon de piston (5) et la barrette (52).

9. Dispositif selon l'une des revendications précédentes, caractérisé en ce que l'ouverture d'évacuation (31) est disposée de façon excentrée dans le fond de boîtier (3).

10. Dispositif selon l'une des revendications précédentes, caractérisé en ce que le fond de boîtier (83) est pourvu d'une coiffe de fermeture rotative (6), qui comporte une ouverture (61) servant pour la réception d'une douille (11) qui est en alignement dans une position de la coiffe de fermeture (6) avec l'ouverture d'évacuation (31).

11. Dispositif selon la revendication 10, caractérisé en ce que l'ouverture de la coiffe de fermeture (61) et la douille (11) sont susceptibles d'être reliées l'une à l'autre à la manière d'un joint à baïonnette.

12. Dispositif selon la revendication 10, caractérisé en ce que la douille (11) est susceptible d'être vissée dans l'ouverture de coiffe de fermeture (61).

13. Dispositif selon la revendication 1, caractérisé en ce que le couvercle de boîtier (2) est susceptible d'être vissé sur le boîtier cylindrique (1) et comporte une ouverture d'aération pouvant être fermée par l'intermédiaire d'un coulisseau (13)

## Claims

1. Device for whipping foam or egg-white with a cylindrical housing (1), the base (3) and lid of which are closable, and in which at least one perforated disc (7, 8, 9) which is connected, via a piston rod (4) which passes through a central hole in the housing lid (2), to a handle (10) located outside the housing (1), is arranged so as to be movable back and forth, and with a closable emptying opening (31) arranged in the housing base (3), characterised in that a closed, cylindrical piston packing (5) is arranged inside the cylindrical housing (1) between the housing lid (2) and the at least one perforated disc (7, 8, 9), the outer diameter of which packing is matched to the inner diameter of the cylindrical housing (1) and which has means (52) for connecting the piston packing (5) to the at least one perforated disc (7, 8, 9).

2. Device according to Claim 1, characterised in that the perforated disc consists of a perforated spring disc (7, 8) which has centrally open leaf springs (72, 73) which stand out from the perforated spring disc (7, 8).

3. Device according to Claims 1 and 2, characterised by a perforated disc arrangement (7, 8, 9) which consists of two perforated spring discs (7, 8) and a perforated disc (9) disposed at the end of the piston rod (4).

4. Device according to Claim 3, characterised in that the two perforated spring discs (7, 8) each have two opposing, centrally opening leaf springs (72, 73) which are offset by 90° relative to each other.

5. Device according to Claim 3, characterised in that the piston rod (4) at its end (41) opposite the handle (10) is of cylindrical shape for receiving the perforated disc arrangement (7, 8, 9) and has two opposing cams (42, 43), and that a circumambient groove (44) is provided at the end of the piston rod (4) for receiving the perforated disc (9).

6. Device according to one of the preceding Claims, characterised in that the perforated spring discs (7, 8) have a central hole (74) with two notches (75, 76) corresponding to the cams (42, 43) of the piston rod (4), and that the notches (75, 76) of both perforated spring discs (7, 8) are offset by 90° relative to each other.

7. Device according to Claim 5, characterised in that the perforated disc (9) has a central first hole (92) which is matched to the circumambient groove (44) of the piston rod (4) and a second hole (93) adjoining the first hole (92), the diameter of which second hole is greater than that of the first hole (92).

8. Device according to Claims 1 and 5, characterised in that the piston packing (5) is made of elastic material and that the means for connecting the piston packing (5) to the at least one perforated disc (7, 8, 9) consists of an inwardly directed, circumambient bar which is disposed in the lower region of the piston packing (5) in such a manner that the perforated disc arrangement (7, 8, 9) can be inserted between the upper side of the piston packing (5) and the bar (52).

9. Device according to one of the preceding Claims, characterised in that the emptying opening (31) is disposed eccentrically in the base (3) of the housing.

10. Device according to one of the preceding Claims, characterised in that the base (3) of the housing is provided with a rotary closing cap (6) which has an opening (61) serving to receive a nozzle (11), which opening is flush with the emptying opening (31) in one position of the closing cap (6).

11. Device according to Claim 10, characterised in that the closing cap opening (61) and the nozzle (11) can be connected together in the manner of a bayonet catch.

12. Device according to Claim 10, characterised in that the nozzle (11) can be screwed into the closing cap opening (61).

13. Device according to Claim 1, characterised in that the housing lid (2) can be screwed on to the cylindrical housing (1) and has a vent hole which can be closed by means of a slider (13).

## FIG 1

## FIG 2

FIG. 3A

10

FIG. 3C

FIG. 3B

10

4

41

A — A

42

44

Schnitt A-A

42

41

43

FIG. 4

51

5

a

52

EP 0 254 671 B1

## FIG. 5A

B

72

7

71

76

75

74

73

## FIG. 5B

7

72

74

71

## FIG. 6A

9

91

93

92

## FIG. 6B

9

91

93

92

4

FIG. 7 A

FIG. 7 B

FIG. 8 A

FIG. 8 B

_FIG. 9_

110
111
11

110

110

_FIG. 10_

110
111
11

110

110

_FIG. 11_

110
111
11

110

110